# EUROPEAN PATENT APPLICATION

(11) **EP 3 778 929 A1**
(43) Date of publication of application: **17.02.2021**
(21) Application number: 19781193.8
(22) Date of filing: 04.03.2019
(51) Int. Cl.: C21D 1/00, B65G 39/07, B65H 5/06, F27B 9/24

(54) **CONVEYANCE ROLLER FOR HEATING FURNACE**

(30) Priority: 02.04.2018 JP 2018071213
(71) Applicant: Noritake Co., Limited, Nishi-ku Nagoya-shi Aichi 451-8501 (JP)
(72) Inventor: UEDA Hirotoshi, Nagoya-shi, Aichi 451-8501 (JP); SUZUKI Kiyotaka, Nagoya-shi, Aichi 451-8501 (JP); KANDA Takeyuki, Nagoya-shi, Aichi 451-8501 (JP); YAMAMOTO Shigehito, Nagoya-shi, Aichi 451-8501 (JP)
(74) Representative: TBK
(86) International application number: PCT/JP2019/008476
(87) International publication number: WO 2019/193895

(57) **Abstract**

Provided is a conveyance roller for a heating furnace, wherein the roller is resistant to local deformations.

A steel sheet is conveyed while being held exclusively by holding protrusions 70 made of a heat-resistant alloy and provided on an outer circumferential surface of a roller body 68, wherein the holding protrusions 70 protrude from the outer circumferential surface of the roller body 68 in ae plurality of positions at a given interval in a longitudinal direction of the roller body 68, and have a height larger than the shielding members 72. The holding protrusions 70 made of the heat-resistant alloy are in contact at small contact areas with the conveyed steel sheet in a cold state so that heat transmission from the roller body 68 to the steel sheet is small, and heat radiation from the roller body 68 having a high temperature is shielded by the shielding members 72 provided between the holding protrusions 70 whereby rapid cooling of the roller body 68 is suppressed, so that local deformations of the outer circumferential surface of the roller body 68 are suppressed. Therefore, the holding protrusions 70 are not deformed and obstacle to the conveyance of the steel sheet is cleared.

## Description

### TECHNICAL FIELD

The present invention relates to a conveyance roller for a heating furnace that is configured to receive a cold object to be heated in the heating furnace and then convey the heated object out of the heating furnace, by using the conveyance roller, and more particularly, to a technique for suppressing deformation of the conveyance roller.

### BACKGROUND ART

Conventionally, there has been proposed a conveyance roller resistant to thermal shock and thermal deformation and having an elongated shape, as a member for holding and conveying a normal-temperatured object such as a steel sheet and a sintered-alloy molded object into a heating furnace in which a heat treatment is performed to cause the object to glow, and then conveying the heated object out of the heating furnace, wherein the conveyance roller is configured to hold and convey the object, with a longitudinally intermediate portion of the conveyance roller being positioned inside the heating furnace, and with opposite end portions of the conveyance roller being supported outside the heating furnace. As an example of such a conveyance roller, Patent Document 1 discloses a conveyance member for a heating furnace. The disclosed conveyance member has a double-tube structure including an outer tubular member, an inner tubular member disposed inside the outer tubular member, and an intermediate member through which the outer and inner tubular members are integrally superposed on each other, wherein the outer tubular member is made of a heat-resistant alloy that is relatively highly resistant to thermal shock and corrosion, the inner tubular member is made of a ceramics material that is relatively highly resistant to thermal deformation, and the intermediate member is made of a heat insulating material resistant to heat. It is considered that the above-described conveyance member disclosed in Patent Document 1 is higher resistant to thermal shock and thermal deformation, as compared with a conveyance roller proposed in Patent Document 2, which is constituted by an outer tube made of a ceramics material that is relatively low resistant to thermal shock and an inner tube made of steel or heat-resistant alloy.

### PRIOR ART DOCUMENTS

### PATENT DOCUMENTS

Patent Document 1:
   Japanese Unexamined Patent Application Publication No. 2015-127617
Patent Document 2:
   Japanese Unexamined Patent Application Publication No. 2008-105085

### DISCLOSURE OF THE INVENTION

### OBJECT TO BE ACHIEVED BY THE INVENTION

By the way, where the heating furnace is used to heat a sheet made of high-tensile strength steel before the sheet is subjected to a pressing operation, there is a case in which it is desired that the sheet is heated to a red heat temperature that is about 900°C-1000°C by an intermittent conveyance of the sheet, so as to reduce a length of the heating furnace for reducing a space in which the heating furnace is to be installed in a factory. In the heating furnace used for such a purpose, there is repeated an operation in which a cold object is received by the conveyance roller that is disposed inside the furnace and has been heated to a high temperature, and is then conveyed out of the heating furnace by rotation of the conveyance roller after the received object is heated to a high temperature while being stopped for, for example, about 30 seconds. The conveyance roller used in such a heating furnace, when being used for a relatively long time, is likely to suffer from local deformations of its outer circumferential surface which are successions of bulges in its circumferential direction, which could be an obstacle to conveyance of the object to be heated. For example, there is a problem that a direction of the conveyance of the object is deviated whereby the object is conveyed to a variable position or the object interferes with a wall of the heating furnace thereby causing conveyance stuck. This problem is caused also where the inner tubular member is not provided in the conveyance roller.

The present invention was made in view of the background discussed above. It is therefore an object of the present invention to provide a conveyance roller for a heating furnace, wherein the conveyance roller is resistant to local deformations.

Various studies made by inventors of the present invention and their collaborators under the above-described situation made them assume that the conveyance roller used inside the heating furnace is in a high temperature state while the object conveyed inside the heating furnace to be heated is in a normally cold state so that the conveyance roller is rapidly cooled, and the rapid cooling of the conveyance roller causes local deformations in the conveyance roller. Then, the inventors and their collaborators found that the occurrence of successions of local deformations on the outer circumferential surface of the conveyance roller in the circumferential direction can be suppressed by an arrangement in which a radially outwardly protruding holding protrusion or protrusions are provided on the conveyance roller so as to reduce an area of contact with the object for thereby suppressing heat transmission and a shielding member or members are provided between the holding protrusion or protrusions so as to cover the outer circumferential surface of the conveyance roller for thereby retraining radiative cooling. The present invention has been developed based on the above finding.

### MEASURES FOR SOLVING THE PROBLEM

That is, the gist of the present invention is that, in a conveyance roller for a heating furnace, the conveyance roller having an elongated shape, and configured to hold and convey an object to be heated in the heating furnace, with a longitudinally intermediate portion of the conveyance roller being positioned inside the heating furnace and with opposite end portions of the conveyance roller being supported outside the heating furnace, the conveyance roller comprises: a roller body constituted by a metal tube made of a heat-resistant alloy; a holding protrusion made of a heat-resistant alloy and provided on an outer circumferential surface of the roller body for holding the object, the holding protrusion protruding from the outer circumferential surface of the roller body in a plurality of positions at a given interval in a longitudinal direction of the roller body; and a shielding member covering between the holding protrusion, the shielding member having a thickness not larger than a height of the holding protrusion from the outer circumferential surface of the roller body.

The gist of a second aspect of the present invention is that, in the first aspect of the invention, the holding protrusion is constituted by a plurality of annular-shaped wires or annular-shaped built-up welded members which are made of a heat-resistant alloy and which are welded on the outer circumferential surface of the roller body in the plurality of positions at the given interval in the longitudinal direction of the roller body.

The gist of a third aspect of the present invention is that, in the first aspect of the invention, the holding protrusion is constituted by a single helical-shaped wire or single helical-shaped built-up welded member which is made of a heat-resistant alloy and which is helically welded on the outer circumferential surface of the roller body.

The gist of a fourth aspect of the present invention is that, in the first or second aspect of the invention, the shielding member is constituted by one or two or more short tubes made of a heat-resistant alloy and having the thickness not larger than the height of the holding protrusion from the outer circumferential surface of the roller body, such that the short tubes are provided between the holding protrusion and is fitted on the outer circumferential surface of the roller body with a given amount of play.

The gist of a fifth aspect of the present invention is that, in the first or second aspect of the invention, the shielding member is constituted by a heat-insulating material member having the thickness not larger than the height of the holding protrusion from the outer circumferential surface of the roller body, such that the heat-insulating material member is wound between the holding protrusion and covers the outer circumferential surface of the roller body.

The gist of a sixth aspect of the present invention is that, in the third aspect of the invention, the shielding member is constituted by a heat-insulating material member having the thickness not larger than the height of the holding protrusion from the outer circumferential surface of the roller body, such that the heat-insulating material member is wound between the helical-shaped wire or the helical-shaped built-up welded member and covers the outer circumferential surface of the roller body.

### EFFECT OF THE INVENTION

According to the conveyance roller for the heating furnace of the first aspect of the invention, the object to be heated is held or conveyed while being held by the holding protrusion made of the heat-resistant alloy and provided on the outer circumferential surface of the roller body, wherein the holding protrusion protrudes from the outer circumferential surface of the roller body in the plurality of positions at the given interval in the longitudinal direction of the roller body, and has a height larger than the shielding member. In this instance, the holding protrusion made of the heat-resistant alloy is in contact at a small contact area with the cold object so that heat transmission from the roller body having a high temperature to the object is small, and heat radiation from the roller body having the high temperature is shielded by the shielding member provided between the holding protrusion so that rapid cooling of the roller body is suppressed, whereby local deformations of the outer circumferential surface of the roller body are suppressed. Thus, since the local deformations of the outer circumferential surface of the roller body are suppressed, the holding protrusion is not deformed and obstacle to the conveyance of the object is cleared. Particularly, where the conveyance roller is used in an intermittent conveyance in which the conveyance roller having the high temperature holds a cold steel sheet with its rotation being stopped for a rotation stop time, the cold steel sheet is avoided from being brought into direct contact with the outer circumferential surface of the roller body, and the radiative cooling from the roller body having the high temperature is suppressed by the shielding member that is interposed between the cold steel sheet and the roller body, so that it is possible to advantageously suppress the local deformations of the outer circumferential surface of the roller body which are successions of bulges in its circumferential direction.

According to the conveyance roller for the heating furnace of the second aspect of the invention, the holding protrusion is constituted by the plurality of annular-shaped wires or annular-shaped built-up welded members which are made of the heat-resistant alloy and which are welded on the outer circumferential surface of the roller body in the plurality of positions at the given interval in the longitudinal direction of the roller body. Owing to this arrangement, the object to be heated is held by the roller body exclusively through the plurality of annular-shaped wires or annular-shaped built-up welded members, whereby the cold object is avoided from being brought into direct contact with the outer circumferential surface of the roller body, so that it is possible to suppress the deformations of the outer circumferential surface of the roller body.

According to the conveyance roller for the heating furnace of the third aspect of the invention, the holding protrusion is constituted by the single helical-shaped wire or single helical-shaped built-up welded member which is made of the heat-resistant alloy and which is helically welded on the outer circumferential surface of the roller body. Owing to this arrangement, the object to be heated is held by the roller body exclusively through the single helical-shaped wire or single helical-shaped built-up welded member, whereby the cold object is avoided from being brought into direct contact with the outer circumferential surface of the roller body, so that it is possible to suppress the deformations of the outer circumferential surface of the roller body. Further, since the helical-shaped wire or helical-shaped built-up welded member is constituted by a single heat-resistant metallic wire that is continuously welded on the outer circumferential surface of the roller body, the conveyance roller can be manufactured easier as compared with an arrangement in which the plurality of annular-shaped wires are constituted.

According to the conveyance roller for the heating furnace of the fourth aspect of the invention, the shielding member is constituted by one or two or more short tubes made of the heat-resistant alloy and having the thickness not larger than the height of the holding protrusion from the outer circumferential surface of the roller body, such that the short tubes are provided between the holding protrusion and is fitted on the outer circumferential surface of the roller body with a given amount of play. In this arrangement, the short tube can be easily formed by cutting a tube having certain dimensions, i.e., a thickness that is not larger than the height of the holding protrusion from the outer circumferential surface of the roller body and an inside diameter that is larger than an outside diameter of the roller body.

According to the conveyance roller for the heating furnace of the fifth aspect of the invention, the shielding member is constituted by the heat-insulating material member having the thickness not larger than the height of the holding protrusion from the outer circumferential surface of the roller body, such that the heat-insulating material member is wound between the holding protrusion and covers the outer circumferential surface of the roller body. In this arrangement, the shielding member can be easily formed by winding a strip-shaped heat-insulating material member woven from a fiber of heat-insulating material such as a ceramic fiber like fused silica and alumina, by at least one round, and sewing ends of the strip-shaped heat-insulating material member together.

According to the conveyance roller for the heating furnace of the sixth aspect of the invention, the shielding member is formed to a helical tubular shape from the heat-insulating material member having the thickness not larger than the height of the holding protrusion from the outer circumferential surface of the roller body, such that the heat-insulating material member is wound between the helical-shaped wire or the helical-shaped built-up welded member and covers the outer circumferential surface of the roller body. In this arrangement, the shielding member can be further easily formed by winding a strip-shaped heat-insulating material member woven from a fiber of heat-insulating material such as a ceramic fiber like fused silica and alumina, between the helical-shaped wire or the helical-shaped built-up welded member, by at least one round and fixing ends of the strip-shaped heat-insulating material member together.

### BRIEF DESCRIPTION OF DRAWINGS

[FIG. 1] A side view of an intermittent-conveyance type steel-sheet heating furnace provided with a heating-furnace conveyance roller, which is an example of the present invention.
[FIG. 2] A cross sectional view of the intermittent-conveyance type steel-sheet heating furnace of FIG. 1, taken along line II-II in FIG. 1.
[FIG. 3] A view explaining the heating-furnace conveyance roller applied to the intermittent-conveyance type steel-sheet heating furnace of FIG. 1, by cutting away and enlarging a part of the conveyance roller in its longitudinal direction.
[FIG. 4] An enlarged view showing, in enlargement, a part of the heating-furnace conveyance roller of FIG. 3.
[FIG. 5] A view explaining the heating-furnace conveyance roller of FIG. 3 or FIG. 4, by showing, in further enlargement, the conveyance roller, with a part of a shielding member being cut away.
[FIG. 6] A photograph showing an example of the heating-furnace conveyance roller shown in FIGS. 3-5.
[FIG. 7] A photograph showing a result of a conveyance test conducted by using a heating-furnace conveyance roller of comparative example 1 corresponding to a conventional product.
[FIG. 8] A photograph showing a result of a conveyance test conducted by using a heating-furnace conveyance roller of comparative example 2 corresponding to a conventional product.
[FIG. 9] A view corresponding to FIG. 5 and explaining a heating-furnace conveyance roller according to another embodiment of the present invention.
[FIG. 10] A view corresponding to FIG. 4 and explaining a heating-furnace conveyance roller according to still another embodiment of the present invention.
[FIG. 11] A view corresponding to FIG. 4 and explaining a heating-furnace conveyance roller according to still another embodiment of the present invention.

### MODES FOR CARRYING OUT THE INVENTION

In an embodied form of the present invention, the outer circumferential surface of the roller body made of the heat-resistant alloy is coated with a film of a ceramics such as oxide, nitride and carbide, wherein the coating material is caused to adhere onto the outer circumferential surface of the roller body by using a method such as thermal spraying, sputtering and vapor deposition. It is therefore possible to increase a durability of an outer tubular member and to prevent dirt and adhesion of a metal oxide to an object to be heated.

Further, in an embodied form of the present invention, the roller body made of the heat-resistant alloy, the plurality of annular-shaped wires made of the heat-resistant alloy, the single helical-shaped wire and a cylindrical-shaped member made of a heat-resistant alloy and constituting the short tube may be constituted by, for example, a heat-resistant alloy such as a metallic material having a heat resistance and a corrosion resistance, wherein the metallic material may be a stainless steel such as SUS310S, a molybdenum steel, a chromium molybdenum steel, a ferritic heat-resistant steel, a nickel-based alloy or a cobalt alloy.

Hereinafter, there will be described embodiments of heat-furnace conveyance rollers used for a heating furnace for heating an object to be heated, in detail with reference to the drawings.

### EMBODIMENT 1

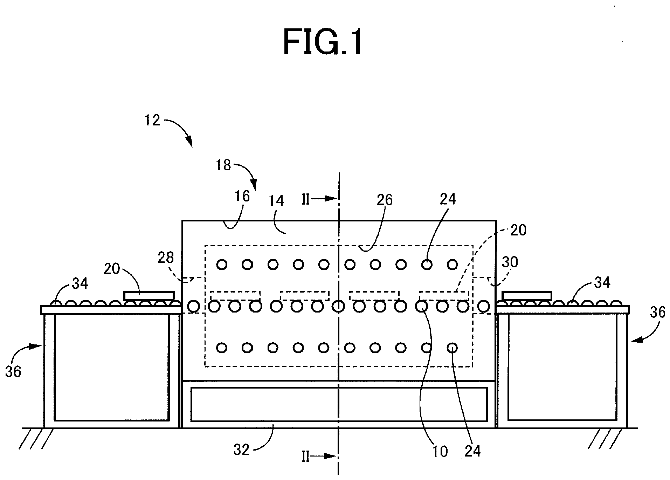

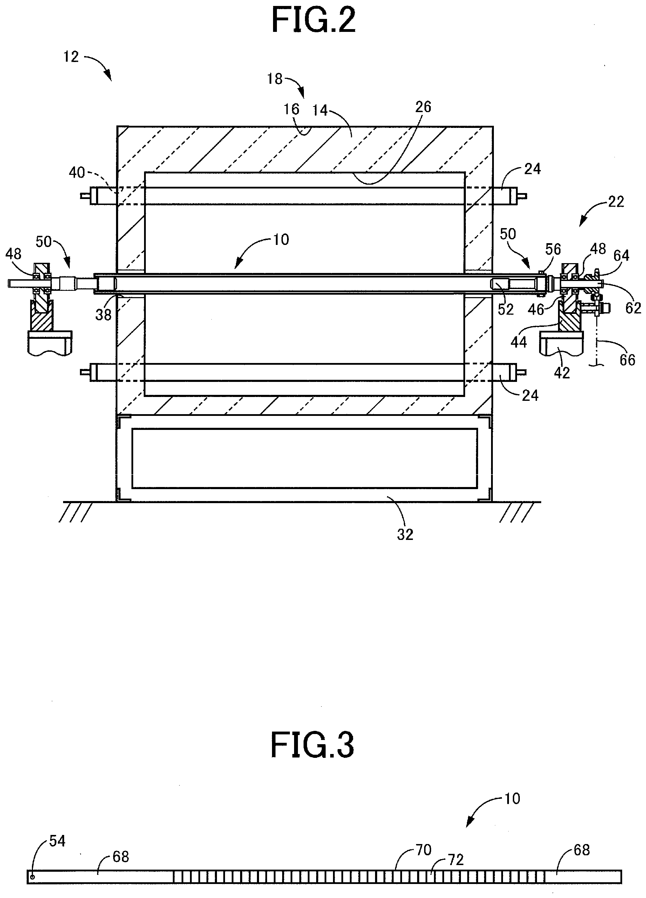

FIG. 1 is a side view of an intermittent-conveyance type steel-sheet heating furnace 12 as an example of a heating furnace provided with a heating-furnace conveyance rollers (hereinafter referred to as conveyance rollers) 10, which is an embodiment of the present invention. FIG. 2 is a cross sectional view of the intermittent-conveyance type steel-sheet heating furnace 12 of FIG. 1, taken along line II-II in FIG. 1. The intermittent-conveyance type steel-sheet heating furnace 12 includes: an elongated-shaped furnace body 18 consisting of a heat-insulating material member 14 configured to keep a high temperature state inside the heating furnace and a casing 16 covering the heat-insulating material member 14; the plurality of conveyance rollers 10 arranged to be parallel to each other at a given interval so as to hold and convey a steel sheet 20 as an object to be heated, in a direction away from one of opposite end portions of the furnace body 18 in a longitudinal direction of the furnace body 18 toward the other of the opposite end portions; a conveyance-roller supporting device 22 configured to rotatably support opposite end portions of each of the conveyance rollers 10; a roller driving device (not shown) configured to rotate the conveyance rollers 10 rotatably supported by the conveyance-roller supporting device 22 in an intermittent manner with a given cycle, for example, of several ten seconds; and elongated-shaped heaters 24 configured to heat an inside of the furnace body 18 to a high temperature. The furnace body 18 includes: a furnace chamber 26 which is covered at its four sides by the heat-insulating material member 14 so as to be formed in a tunnel shape; an entrance 28 and an exit 30 that are provided in the respective opposite end portions of the furnace chamber 26 in a longitudinal direction of the furnace chamber 26; and shutters (not shown) each of which is to be operated to shut a corresponding one of the entrance 28 and the exit 30 when conveyance of the steel sheet 20 is stopped, namely, when rotations of the respective conveyance rollers 10 are stopped.

The furnace body 18 of the intermittent-conveyance type steel-sheet heating furnace 12 has a plurality of pairs of through-holes 38 provided in vertically central portions of respective opposite side walls of the furnace body 18 so as to be formed through the opposite side walls of the furnace body 18 for thereby communicating the furnace chamber 26 and an outside of the furnace body 18, such that each of the conveyance rollers 10 passes through a corresponding one of the pairs of through-holes 38. The pairs of through-holes 38 are parallel to each other, and are spaced apart from each other at a given interval in the longitudinal direction of the furnace body 18. Each of the pairs of through-holes 38 are coaxial with each other, and each of the through-holes 38 has a substantially circular-shaped cross section. The furnace body 18 further has a plurality of pairs of through-holes 40 located on an upper side of at least the pairs of through-holes 38 so as to be formed through the opposite side walls of the furnace body 18 for thereby communicating the furnace chamber 26 and the outside of the furnace body 18, in the same conditions as the pairs of through-holes 38, such that each of the heaters 24 passes through a corresponding one of the pairs of through-holes 40. Each of the through-holes 40 has a substantially circular-shaped cross section.

As shown in detail in FIG. 1, the conveyance rollers 10 are disposed, through the roller driving device, above a base 32 that is horizontally placed. Further, conveyors 36 each including conveyance rollers 34 are disposed to be adjacent to the respective opposite end portions of the intermittent-conveyance type steel-sheet heating furnace 12 in a longitudinal direction of the heating furnace 12, such that a contact point at which each of the conveyance rollers 10 is in contact with the steel sheet 20 and a contact point at which each of the conveyance rollers 34 is in contact with the steel sheet 20 lie on substantially the same plane. Each of the conveyors 36 is configured to convey the steel sheet 20 that has been subjected to a pre-step such as a punching step in which a high-tensile steel sheet having predetermined dimensions is punched by a pressing machine, to the entrance 28 of the furnace body 18, or to convey the steel sheet 20 that has been subjected to a heat treatment in the furnace chamber 26 and then conveyed out of the furnace body 18 through the exit 30, to a next step. It is noted that the roller driving device includes a roller driving motor (not shown) and an output shaft to which a drive sprocket is fixed. A chain 66 (described later) is wound on the drive sprocket. Further, it is preferable that each of the conveyance rollers 34 has substantially the same constriction as each of the conveyance rollers 10.

The steel sheet 20, which has been conveyed from, for example, the punching step in which the high-tensile steel sheet was punched by the pressing machine, to the entrance 28 of the furnace chamber 26 of the intermittent-conveyance type steel-sheet heating furnace 12 by one of the conveyors 36, is conveyed into the furnace chamber 26 through the entrance 28 in which the shutter is opened, and then is subjected to the heat treatment in which the steel sheet 20 is heated to about 900 °C-1000 °C while being held and conveyed in an intermittent manner with a given cycle toward the exit by the conveyance rollers 10 inside the furnace chamber 26 in which the temperature is raised to a high degree by the heaters 24. When the heat treatment applied to the steel sheet 20 is completed with the steel sheet 20 having been conveyed to a vicinity of the exit 30 of the furnace chamber 26, the steel sheet 20 is intermittently conveyed out of the furnace body 18 through the exit 30 in which the shutter is opened. The steel sheet 20, which has been conveyed out of the furnace body 18, is conveyed by the conveyors 36 to a next step, e.g., a pressing step.

As shown in FIG. 2, the plurality of conveyance rollers 10 are disposed in a vicinity of a lower end portion of the furnace chamber 26 in a vertical direction of the furnace chamber 26 such that the opposite end portions of each of the conveyance rollers 10 protrude out of the furnace body 18 through a corresponding one of the plurality of pairs of through-holes 38. The plurality of conveyance rollers 10 are elongated in a direction orthogonal to the longitudinal direction of the furnace body 18, namely, in a direction orthogonal to a conveyance direction of the steel sheet 20, and are arranged in parallel to each other in a horizontal row at a constant interval in the direction orthogonal to the conveyance direction. Further, the plurality of heaters 24 are disposed in a vicinity of un upper end portion and the vicinity of the lower end portion of the furnace chamber 26 in the vertical direction of the furnace chamber 26 such that opposite end portions of each of the heaters 24 protrude out of the furnace body 18 through a corresponding one of the plurality of pairs of through-holes 40. The plurality of heaters 24 are located on upper and lower sides of the conveyance rollers 10, and are arranged in parallel to each other in a horizontal row at a constant interval in the direction orthogonal to the conveyance direction. It is noted that the plurality of heaters 24 may be replaced by plate-shaped heaters.

The conveyance-roller supporting device 22 includes: support columns 42 provided to stand in positions adjacent to the opposite side walls of the furnace body 18; elongated members 44 each of which is supported by the support columns 42 and horizontally extends in parallel to a corresponding one of the opposite side walls of the furnace body 18; elongated-shaped support plates 46 each of which is fixedly fitted in a recessed portion that is downwardly recessed in an upper end surface of a longitudinally intermediate portion (that is other than longitudinally opposite end portions) of a corresponding one of the elongated members 44; a plurality of pairs of ball bearings 48 that are fitted in respective positions that are located in a vicinity of a central portion of each of the support plates 46 in a width direction of the support plate 46, such that each of the positions corresponds to an extension of a line connecting the corresponding one of the plurality of pairs of through-holes 38; and a pair of elongated-shaped support shafts 50 each of which is rotatably supported by the ball bearings 48 in a cantilever manner.

Each of the conveyance rollers 10 is rotatably supported by the pair of elongated-shaped support shafts 50, with cylindrical-shaped distal end portions 52 of the respective support shafts 50 being axially introduced and fitted in the respective opposite end portions of the cylindrical-shaped conveyance roller 10. In one of the opposite end portions of each conveyance roller 10, a pin 56 is inserted in a pin receiving hole 54 (see FIG. 3 described later) which is provided in a longitudinally intermediate portion of the distal end portion 52 of the support shaft 50 fitted in the one of the opposite end portions of the conveyance roller 10 and which is formed through the conveyance roller 10 in a direction substantially perpendicular to an axis of the support shaft 50. Further, the chain 66 is looped over a sprocket wheel (not shown) provided on the output shaft of the roller driving device and a sprocket wheel 64 provided in a proximal end portion 62 of the support shaft 59 on a side of the above-described one of the opposite end portions of the conveyance roller 10, i.e., on a side of the pin 56 inserted in the pin receiving hole 54.

Thus, each of the conveyance rollers 10, which is supported by the conveyance-roller supporting device 22 through the support shafts 50 and is rotatable about the axes of the support shafts 50, is to be driven and rotated by the roller driving motor through the chain 66 and one of the support shafts 50 on the side of the above-described one of the opposite end portions of the conveyance roller 10, whereby the steel sheet 20 placed on the conveyance roller 10 is conveyed.

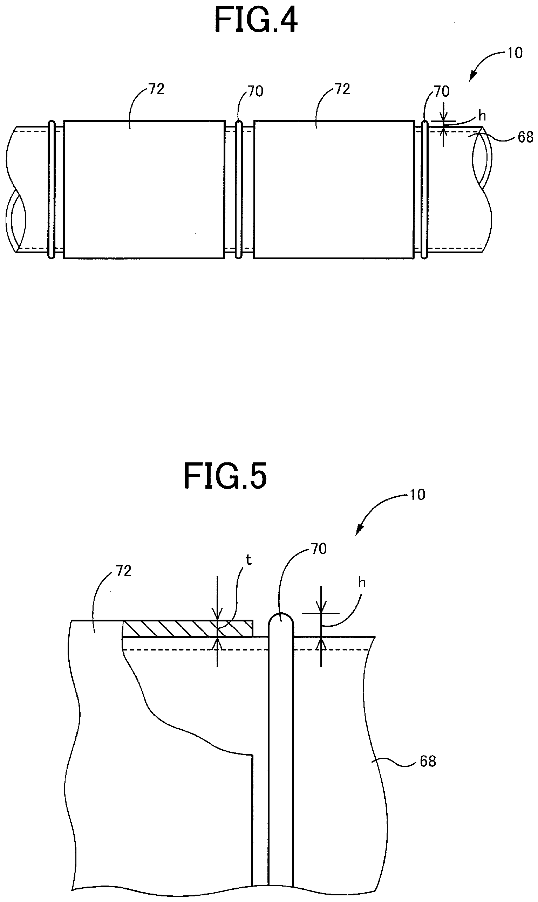

FIGS. 3 through 5 are views explaining in detail the conveyance roller 10 rotatably supported by the conveyance-roller supporting device 22. FIG. 3 is a view explaining the conveyance roller 10 applied to the intermittent-conveyance type steel-sheet heating furnace 12 of FIG. 1, by cutting away a part of the conveyance roller 10 in its longitudinal direction. FIG. 4 is a view showing, in enlargement, a part of the conveyance roller of FIG. 3 in its longitudinal direction. FIG. 5 is a view showing the conveyance roller 10 of FIG. 3 or FIG. 4, by cutting away a part of a shielding member disposed on the conveyance roller 10.

In FIGS. 3 through 5, the conveyance roller 10 includes a roller body 68 constituted, for example, by a metal tube made of a heat-resistant alloy and having a length of about 2200 mm and an outside diameter of about 38.5 mm; holding protrusions 70 made of a heat-resistant alloy and protruding from an outer circumferential surface of the roller body 68 in a plurality of positions at a given interval in a longitudinal direction of the roller body 68, for holding the steel sheet 20, and shielding members 72 covering between the holding protrusions 70 and having a thickness t that is not larger or smaller than a height h of the holding protrusions 70 from the outer circumferential surface of the roller body 68. The length and the diameter of the roller body 68 may be changed as needed.

The holding protrusions 70 are constituted by a plurality of annular-shaped wires each of which is made of a heat-resistant alloy and has a circular or rectangular cross sectional shape with a diameter or thickness of about 1.6 mm Φ, for example. The holding protrusions 70 are welded on the outer circumferential surface of the roller body 68 in the plurality of positions at the given interval in the longitudinal direction of the roller body 68. That is, the height h of the holding protrusions 70 from the outer circumferential surface of the roller body 68 is about 1.6 mm, for example. However, the height h is not limited to this particular value.

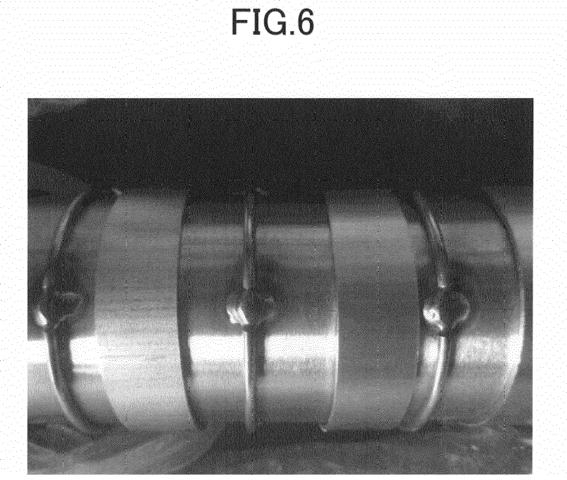

Each of the shielding members 72 is constituted by a short tube made of a heat-resistant alloy and having the thickness t of 1.6 mm, for example, which is not larger or smaller than the height h of the holding protrusion 70 from the outer circumferential surface of the roller body 68, such that the short tube is provided between the holding protrusions 70 and is fitted on the outer circumferential surface of the roller body 68 with a given amount of play. The shielding members 72 may be provided on the outer circumferential surface of the roller body 68, such that the single short tube is disposed between each adjacent two of the holding protrusions 70, as shown in FIG. 4, or such that two or more single short tubes are disposed between each adjacent two of the holding protrusions 70. The short tube has an entire length of about 10 mm, for example, which is sufficiently smaller than a distance between each adjacent two of the holding protrusions 70. The short tube has an inside diameter of about 39 mm, for example, which is sufficiently larger than an outside diameter of the roller body 68 and is preferably not larger than an outside diameter of the holding protrusions 70. FIG. 6 is a photograph showing an example of the heating-furnace conveyance roller 10 constructed as described above.

### [Conveyance Test]

The inventors of the present invention and their collaborators conducted an accelerated conveyance test, by experimentally preparing conveyance rollers of embodiments of the invention, each of which is equivalent to the conveyance roller 10 of FIGS. 4 and 5. That is, each of the experimentally prepared conveyance rollers is constituted by the roller body 68 made of SUS310S, the annular-shaped holding protrusions 70 provided by wires made of SUS310S and welded on the outer circumferential surface of the roller body 68 such that the holding protrusions 70 are arranged at an interval of 20 mm, and the short tubes made of SUS310S are fitted between the holding protrusions 70, and the experimentally prepared conveyance rollers are applied in the intermittent-conveyance type steel-sheet heating furnace 12. The test was conducted under a condition severer than an actual condition, wherein the severer condition is that a conveyance motion is repeated by using, in place of the steel sheet 20, a square pipe which is formed to a U shape and inside which water is circulated. In the conveyance motion, the square pipe is conveyed onto the conveyance rollers inside the intermittent-conveyance type steel-sheet heating furnace 12 that is heated to 900 °C or higher, and is then conveyed out of the intermittent-conveyance type steel-sheet heating furnace 12 after having been stopped for 30 seconds. That is, in the test, the conveyance motion whose cycle time is 40 seconds is repeated, wherein the cycle time is a sum of a conveyance in/out time of 10 seconds and a stop time of 30 seconds. Further, the inventors of the present invention and their collaborators conducted other conveyance tests, by preparing conveyance rollers of comparative example 1 and comparative example 2 Each of the conveyance rollers of the comparative example 1 is a conventional conveyance roller that is constituted by a circular tube made of SUS310S and that has substantially the same length and diameter as the roller body 68 of the conveyance roller of the above-described embodiment, namely, substantially the same as the roller body 68 as such. Each of the conveyance rollers of the comparative example 2 is a conveyance roller that is constituted by the roller body 68 constituted by a circular tube made of SUS310S and having substantially the same length and diameter as the roller body 68 of the conveyance roller of the above-described embodiment and the holding protrusion 70 constituted by a single helical-shaped wire made of a heat-resistant alloy and welded on the outer circumferential surface of the roller body 68 in a helical manner, without the shielding member 72 being provided. The other tests were conducted under conditions substantially the same as the condition of the above-described accelerated conveyance test, by using the conveyance rollers of the comparative examples 1 and 2.

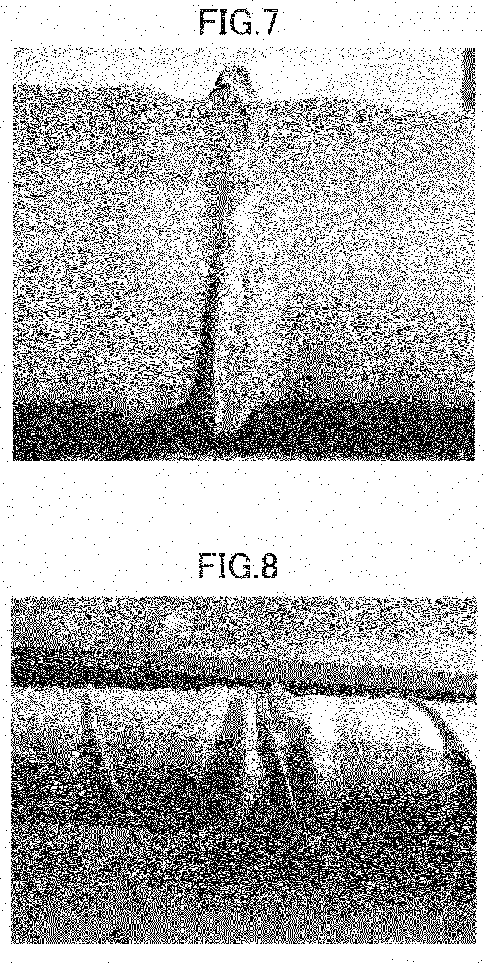

In the above-described conveyance tests, in the conveyance rollers of the comparative examples 1 and 2, there were occurred local deformations in which protrusions are circumferentially formed on surfaces of the conveyance rollers when the conveyance time has reached 36 hours, as shown in FIG. 7 that is a photograph of the comparative example 1 and in FIG. 8 that is a photograph of the comparative example 2. On the other hand, in case in which the conveyance rollers of the above-described embodiments were used, any deformation was not observed even after 72 hours elapsed.

As described above, according to the conveyance roller 10 of the present embodiment, the steel sheet 20 to be heated is conveyed while being held exclusively by the holding protrusions 70 made of the heat-resistant alloy and provided on the outer circumferential surface of the roller body 68, wherein the holding protrusions 70 protrude from the outer circumferential surface of the roller body 68 in the plurality of positions at the given interval in the longitudinal direction of the roller body 68, and have the height larger than the shielding members 72. In this instance, the holding protrusions 70 made of the heat-resistant alloy are in contact at small contact areas with the cold steel sheet 20 so that heat transmission from the roller body 68 having a high temperature to the steel sheet 20 is small, and heat radiation from the roller body 68 having the high temperature is shielded by the shielding members 72 provided between the holding protrusions 70 whereby rapid cooling of the roller body 68 is suppressed, so that local deformations of the outer circumferential surface of the roller body 68 are suppressed. Thus, since the local deformations of the outer circumferential surface of the roller body 68 are suppressed, the holding protrusions 70 is are deformed and obstacle to the conveyance of the steel sheet 20 is cleared. Particularly, where the conveyance roller 10 is used in an intermittent conveyance in which the conveyance roller 10 having the high temperature holds the cold steel sheet 20 with its rotation being stopped for a rotation stop time, as in the present embodiment, the cold steel sheet 20 is avoided from being brought into direct contact with the outer circumferential surface of the roller body 68, and the radiative cooling from the roller body 68 having the high temperature is suppressed by the shielding members 72 that are interposed between the cold steel sheet 20 and the roller body 68, so that it is possible to advantageously suppress the local deformations of the outer circumferential surface of the roller body 68 which are successions of bulges in its circumferential direction.

Further, according to the conveyance roller 10 of the present embodiment, the holding protrusions 70 are constituted by the plurality of annular-shaped wires which are made of the heat-resistant alloy and which are welded on the outer circumferential surface of the roller body 68 in the plurality of positions at the given interval in the longitudinal direction of the roller body 68. Owing to this arrangement, the steel sheet 20 to be heated is held by the roller body 68 exclusively through the plurality of annular-shaped wires, whereby the glowing steel sheet 20 is avoided from being brought into direct contact with the outer circumferential surface of the roller body 68, so that it is possible to suppress the deformations of the outer circumferential surface of the roller body 68.

Further, according to the conveyance roller 10 of the present embodiment, the shielding members 72 are constituted by short tubes made of the heat-resistant alloy and having the thickness not larger than the height h of the holding protrusions 70 from the outer circumferential surface of the roller body 68, such that each one or each two of the short tubes are provided between corresponding adjacent two of the annular-shaped wires and are fitted on the outer circumferential surface of the roller body 68 with a given amount of play. In this arrangement, each of the short tubes can be easily formed by cutting a tube having certain dimensions, i.e., a thickness that is not larger than the height h of the holding protrusions 70 from the outer circumferential surface of the roller body 68 and an inside diameter that is larger than the outside diameter of the roller body 68.

There will be next described other embodiments of this invention. The same reference signs as used in the above-described embodiment will be used in the following embodiments, to identify the substantially corresponding elements, and detailed descriptions thereof are not provided.

### EMBODIMENT 2

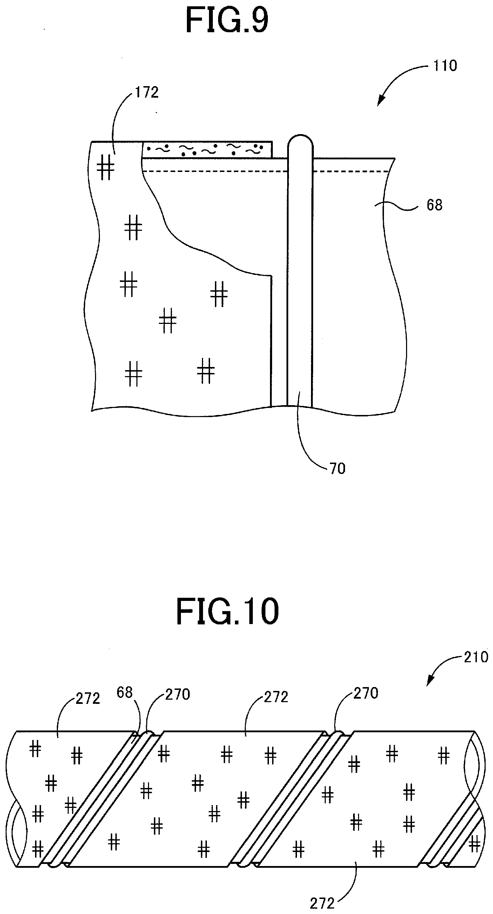

FIG. 9 is a view corresponding to FIG. 5 and showing a conveyance roller 110 according to another embodiment of the present invention. In the embodiment shown in FIG. 5, the shielding member 72 is constituted by the short tube made of the heat-resistant alloy. However, like a shielding member 172 shown in FIG. 9, the shielding member may be constituted by, in place of the short tube made of the heat-resistant alloy, a heat-insulating material member which has a thickness not larger than the height h of the holding protrusions 70 from the outer circumferential surface of the roller body 68 and which is provided between the holding protrusions 70 so as to be wounded on the outer circumferential surface of the roller body 68, so that the outer circumferential surface of the roller body 68 is covered by the heat-insulating material member. This heat-insulating material member is constituted by, for example, a strip-shaped heat-insulating material member woven from a fiber of heat-insulating material such as a ceramic fiber like fused silica and alumina.

According to the conveyance roller 110 of the present embodiment, each of the shielding members 172 is constituted by the heat-insulating material member having the thickness not larger than the height h of the holding protrusions 70 from the outer circumferential surface of the roller body 68, such that the heat-insulating material member is wound between the annular-shaped wires and covers the outer circumferential surface of the roller body 68. In this arrangement, each of the shielding members 172 can be easily formed by winding a strip-shaped heat-insulating material member woven from a fiber of heat-insulating material such as a ceramic fiber like fused silica and alumina, by at least one round, and sewing ends of the strip-shaped heat-insulating material member together.

### EMBODIMENT 3

FIG. 10 is a view corresponding to FIG. 4 and showing a major portion of a conveyance roller 210 according to another embodiment of the present invention. In FIG. 10, a holding protrusion 270 is constituted by a single helical-shaped wire made of a heat-resistant alloy and helically welded on the outer circumferential surface of the roller body 68. Further, a shielding member 272, which is constituted by a heat-insulating material member having a thickness not larger than a height h of the holding protrusion 270 from the outer circumferential surface of the roller body 68, is disposed between the helical-shaped wire in the longitudinal direction of the roller body 68, so as to cover the outer circumferential surface of the roller body 68. This shielding member 272 can be easily formed by winding a strip-shaped heat-insulating material member woven from a fiber of heat-insulating material such as a ceramic fiber like fused silica and alumina, by at least one round, and sewing ends of the strip-shaped heat-insulating material member together.

According to the conveyance roller 210 of the present embodiment, the holding protrusion 270 is constituted by the single helical-shaped wire made of the heat-resistant alloy and which is helically welded on the outer circumferential surface of the roller body 68. Owing to this arrangement, the steel sheet 20 is held by the roller body 68 exclusively through the single helical-shaped wire, whereby the glowing steel sheet 20 is avoided from being brought into direct contact with the outer circumferential surface of the roller body 68, so that it is possible to suppress the deformations of the outer circumferential surface of the roller body 68. Further, since the helical-shaped wire is constituted by a single heat-resistant metallic wire that is continuously welded on the outer circumferential surface of the roller body 68, the conveyance roller 210 can be manufactured easier as compared with an arrangement in which the plurality of annular-shaped wires are constituted.

### EMBODIMENT 4

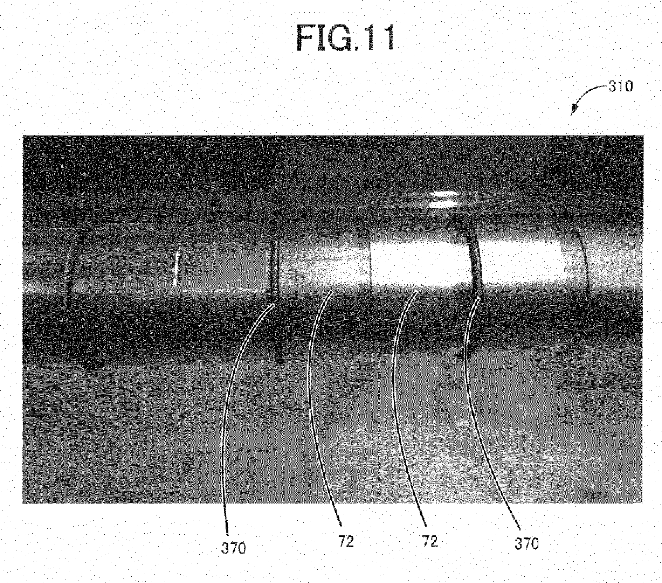

FIG. 11 is a view corresponding to FIG. 4 and showing a major portion of a conveyance roller 310 according to another embodiment of the present invention. In FIG. 10, holding protrusions 370 are constituted by annular-shaped built-up welded members that are formed on the outer circumferential surface of the roller body 68, for example, by a laser welding. In the present embodiment, the shielding members 72, each of which is constituted by the short tube made of the heat-resistant alloy, are provided such that each two of the shielding members 72 are disposed between corresponding adjacent two of the holding protrusions 370. In the present embodiment, too, it is possible to obtain substantially the same effect as the above-described embodiments.

While the invention has been described in detail with reference to the tables and drawings, it is to be understood that the invention may be embodied also in other forms and that various modifications may be added within a range without departing from the spirit of the invention.

For example, the conveyance rollers 10, 110, 210, 310 according to the above-described embodiments are used for the intermittent-conveyance type steel-sheet heating furnace 12. However, these conveyance rollers 10, 110, 210, 310 may be applied to any one of the other types of heating furnaces such as batch-type steel-sheet heating furnace and continuous-type steel-sheet heating furnace.

Further, in the above-described embodiments, each of the holding protrusions 70, 270, 370 is constituted by the wire made of the heat-resistant alloy that is continuously welded in an annular manner or a helical manner. However, the wire may be discontinuously welded. Further, in place of the wire, protrusions such as rivets and pins may be successively arranged in a circumferential direction or a helical direction.

Further, in the above-described embodiments, each of the shielding members 72, 172, 272 is constituted by the short tube made of the heat-resistant alloy, the strip-shaped heat-insulating material member or the strip-shaped heat-insulating material member woven from the fiber of heat-insulating material such as the ceramic fiber like fused silica and alumina. However, each of the shielding members 72, 172, 272 may be constituted by a short tube made of a ceramic.

Further, in the above-described embodiments, the steel sheet 20 is used as the object to be heated. However, for example, a cuboid-shaped steel billet or a sintered alloy part may be used as the object to be heated.

Further, in the above-described embodiment of FIG. 10, the holding protrusion 270 is constituted by the helical-shaped wire welded on the outer circumferential surface of the roller body 68. However, the holding protrusion 270 may be constituted by a helical-shaped built-up welded member.

It is to be understood that what have been described above are merely the embodiments of the present invention, and that the present invention may be embodied with various modifications in a range without departing from the spirit of the invention.

### DESCRIPTION OF REFERENCE SIGNS

10, 110, 210, 310: conveyance roller (conveyance roller for heating furnace) 12: intermittent-conveyance type steel-sheet heating furnace (heating furnace) 20: steel sheet 68: roller body 70, 270, 370: holding protrusion 72, 172, 272: shielding member

## Claims

1. A conveyance roller for a heating furnace, the conveyance roller having an elongated shape, and configured to hold and convey an object to be heated in the heating furnace, with a longitudinally intermediate portion of the conveyance roller being positioned inside the heating furnace and with opposite end portions of the conveyance roller being supported outside the heating furnace,
the conveyance roller being **characterized by** comprising:
a roller body constituted by a metal tube made of a heat-resistant alloy;
a holding protrusion made of a heat-resistant alloy and provided on an outer circumferential surface of the roller body for holding the object, the holding protrusion protruding from the outer circumferential surface of the roller body in a plurality of positions at a given interval in a longitudinal direction of the roller body; and
a shielding member covering between the holding protrusion, the shielding member having a thickness not larger than a height of the holding protrusion from the outer circumferential surface of the roller body.

2. The conveyance roller according to claim 1, **characterized in that**:
the holding protrusion is constituted by a plurality of annular-shaped wires or annular-shaped built-up welded members which are made of a heat-resistant alloy and which are welded on the outer circumferential surface of the roller body in the plurality of positions at the given interval in the longitudinal direction of the roller body.

3. The conveyance roller according to claim 1, **characterized in that**:
the holding protrusion is constituted by a single helical-shaped wire or single helical-shaped built-up welded member which is made of a heat-resistant alloy and which is helically welded on the outer circumferential surface of the roller body.

4. The conveyance roller according to claim 1 or 2, **characterized in that**:
the shielding member is constituted by one or two or more short tubes made of a heat-resistant alloy and having the thickness not larger than the height of the holding protrusion from the outer circumferential surface of the roller body, such that the short tubes are provided between the holding protrusion and is fitted on the outer circumferential surface of the roller body with a given amount of play.

5. The conveyance roller according to claim 1 or 2, **characterized in that**:
the shielding member is constituted by a heat-insulating material member having the thickness not larger than the height of the holding protrusion from the outer circumferential surface of the roller body, such that the heat-insulating material member is wound between the holding protrusion and covers the outer circumferential surface of the roller body.

6. The conveyance roller according to claim 3, **characterized in that**:
the shielding member is constituted by a heat-insulating material member having the thickness not larger than the height of the holding protrusion from the outer circumferential surface of the roller body, such that the heat-insulating material member is wound between the helical-shaped wire or the helical-shaped built-up welded member and covers the outer circumferential surface of the roller body.
